# EUROPEAN PATENT SPECIFICATION

(11) **EP 1 040 324 B1**
(45) Date of publication and mention of the grant of the patent: **06.08.2003**
(21) Application number: 98953088.6
(22) Date of filing: 10.11.1998
(51) Int. Cl.: G01F 23/14, G01F 23/16

(54) **LIQUID LEVEL DETECTOR**
FLÜSSIGKEITSSTAND SENSOR
DETECTEUR DE NIVEAU DE LIQUIDE

(30) Priority: 11.11.1997 KR 9759179
(43) Date of publication of application: 04.10.2000
(73) Proprietor: Kim, Ui-Gyo, Chunchon-shi, Kangwon-do 200-163 (KR); Mok, Do-Gyun, Chunchon-shi, Kangwon-do 200-161 (KR)
(72) Inventor: Kim, Ui-Gyo, Chunchon-shi, Kangwon-do 200-163 (KR); Mok, Do-Gyun, Chunchon-shi, Kangwon-do 200-161 (KR)
(74) Representative: Schnekenbühl, Robert Matthias L.
(86) International application number: KR9800361
(87) International publication number: WO99024793

(56) References cited:
- EP-A1- 0 076 930
- DD-A1- 271 372
- US-A- 4 343 184
- US-A- 4 570 484
- US-A- 4 572 097

## Description

### Field of the Invention

The present invention relates generally to a liquid level detector, and more particularly to an optical liquid level detector measuring a residual liquid level contained in a reservoir such as an oil tank or a water tank.

### Background of the Invention

A conventional boiler system for use at home has an oil tank and an indicator showing a residual quantity of fuel contained in the oil tank. The indicator has a transparent tube located outside of the oil tank and extending vertically. A low end of the tube communicates with the bottom of the oil tank. The level of fuel contained in the oil tank can be seen through the tube. However, it is difficult to look into a residual quantity inside the door and it is inconvenient.

European patent application EP 007 6930 A1 discloses a liquid level detector in which pressure above the liquid is sensed by the movement of a piston against a spring. This has attached thereto a rod which qualifies as a drive mechanism and whose movement is sensed by inductive sensors.

DD 271 372 A1 discloses a liquid level detector with a housing, a flexible wall dividing the housing into dynamic and constant pressure parts, a resilient member and a pressure sensor.

US 4,570,484 discloses a non-contacting liquid measurement system with conduits having respective ends immersed in liquid close to a button to provide respective liquid pressure signals which are collected and averaged in a conduit which delivers the average liquid pressure signal for exposure to flexible diaphragm of an electromagnetic transducer to which is secured metallic armature having a base portion in a projection that is moved by diaphragm in opposite directions within an electromagnetic field produced by a current carrying conductor culled about a core and powered by suitable electric power source.

An optical liquid level detector is disclosed in Korean Patent Examined Publication No. 96-13254. The detector has an air inlet, a planar rubber membrane, a light emitting element and a light receiving element mounted at the top and a reflect plate mounted on the rubber membrane. The detector may be utilized only in a narrow pressure range, that is, in measuring the liquid level of liquid contained in a liquid tank with a small height because the deflection of the rubber membrane is limited. In addition, it is hard to get an output signal showing a linear relationship between an output signal an d a liquid level. Thus, it is difficult to process the output signal into digital signal.

### Summary of the invention

Accordingly, it is an object of the present invention to provide a liquid level detector which has a sealed dynamic pressure chamber against the constant pressure chamber with an improved sensor system.

The above object of the present invention is accomplished by providing a liquid level detector for detecting the level of liquid contained in a liquid container comprising a housing; a wall having at least a portion being flexible, said wall dividing the inside of said housing into a dynamic pressure chamber and a constant, pressure chamber, the dynamic pressure chamber communicating with the liquid container; a drive mechanism having a contact member contacting to said wall and a screen member connecting to the contact member; a resilient member for resiliently urging said contact member of the drive mechanism against said wall; and a sensor having a light emitting element and a light receiving element opposing each other, wherein said screen member of the drive mechanism is interposed between the light emitting element and the light receiving element.

In accordance with a further aspect of the invention, there is provided a fuel supplying system according to claim 7 for supplying fuel to a fuel combustion system comprising a fuel tank and a level detector according to claim 1.

### Brief Description of Drawings

The above and other objects, advantages and features of the present invention will be apparent from the following description of preferred embodiments taken in conjunction with the accompanying drawings, wherein:
Fig. 1 is a block diagram of a boiler system having a liquid level detector in accordance with the present invention:
Fig. 2 is a sectional view of an optical liquid level detector in accordance with the present invention; and
Fig. 3 is a diagram showing a relationship between an output current and a liquid level.

### Detailed Description of the Preferred Embodiment

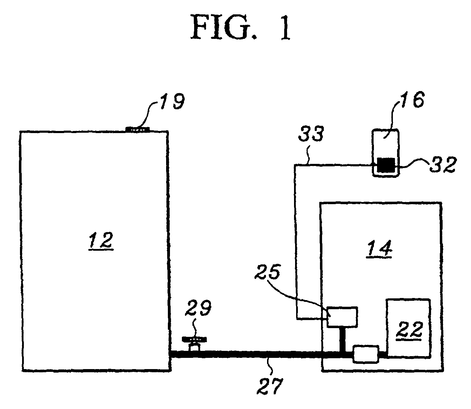

Referring to Fig. 1, the boiler system has an oil or fuel tank 12, a combustion device 14, a control panel 16 and an oil supplying pipe or tube 27. The oil tank 12 has an inlet 19. The oil tank 12 is connected with the combustion device 14 to supply fuel contained in the tank 12 through the supplying pipe 27. The combustion device 14 has a burner 22. The supplying pipe 27 extends to the burner 22. The supplying pipe 27 has a valve 29 and a pump 24 to provide fuel to the burner 22. A liquid level detector 25 in accordance with the present invention is mounted on the supplying pipe 27.

The control panel 16 for controlling the combustion device 14 has a display panel 32 for showing a level of fuel. Wires 33 connect electrically between the detector 25 and the control board 16 so as to supply an electric power to the detector 25 and transmit a signal generated by the detector 25 to the control board 16. The control board 16 has an electronic circuit which processes the transmitted signal into a display signal and displays it on the display panel 32.

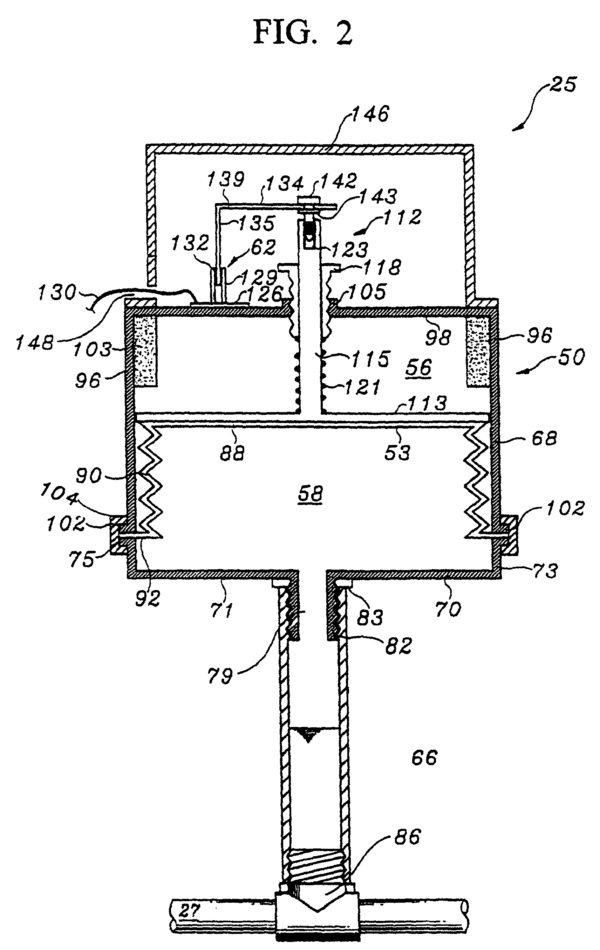

Fig. 2 shows the detector device 25 in accordance with the present invention. The detector device 25 has a housing 50, a bellows type boundary wall or bellows 53, a drive mechanism 112, and a sensing portion or sensor 62. The detector 25 has a constant pressure chamber or atmospheric pressure chamber 56 and a dynamic pressure chamber 58 divided by the boundary wall or bellows 53. The gas such as air is contained in the dynamic pressure chamber 58.

The housing 50 includes an upper case 68 and a lower case 70. The lower case 70 has a circular bottom 71 and a cylindrical sidewall 73 which is extended upwardly from the edge of the bottom 71. A flange 75 is formed on a top of the sidewall 73. The lower case 70 has a bore 79 at the center of the bottom 71 and a boss 82 surrounding the bore 79. A screw thread is formed on the outcr surface of the boss 82.

The boss 82 of the lower case 70 is secured to a connecting pipe 66 through which the dynamic pressure chamber 58 communicates with the supplying pipe 27 (see Fig. 1). The connecting pipe 66 has a screw thread at an inner surface of the top portion so that the connecting pipe 66 is secured to the lower case 70 by way of engagement of the screw threads of the connecting pipe 66 and the boss 82. A annular seal 83 is inserted between the connecting pipe 66 and the lower case 70. Also a screw thread is formed at an inner surface of a bottom portion of the connecting pipe 66.

The supplying pipe 27 has a branch 86. A screw thread is formed at an outer surface of the branch 86. The connecting pipe 66 is mounted on the supplying pipe 27 by engagement of the screw threads of the branch 86 with the screw thread of a bottom portion of the connecting pipe 66. Therefore, the supplying pipe 27 communicates with the dynamic pressure chamber 58 of the inside of the housing 50. An annular seal is inserted between the connecting pipe 66 and the branch 86. It is preferable that the sectional area of the connecting pipe 66 is uniform along the length of the connecting pipe 66 and the top of oil always locates between the top and the bottom of the connecting pipe 66.

The bellows 53 is positioned above the lower case 70. A top end 88 of the bellows 53 is planar and circular and the bottom end is open. A wrinkled sidewall 90 is extended downwardly from the edge of the top 88. A flange 92 is formed at the bottom of the sidewall 90. The flange 92 contacts the flange 75 of the lower case 70. It is preferable that a material of the bellows 53 is a rubber.

The upper case 68 includes a circular top 98 and a cylindrical sidewall 96 extended from the edge of the top 98. The upper case 68 has a bore formed at the center of the top 98 and a boss 105 surrounding the bore. A screw thread is formed on the inner surface of the boss 105. The upper case 68 includes a flange 102 formed at the bottom of the sidewall 96.

The flange 92 of the bellows 53 is interposed between the flange 102 of the upper case 68 and the flange 75 of the lower case 70. The housing 50 has an annular band 104. The upper case 68 and the lower case 70 are joined by the band 104. The connecting band 104 is made of metal. The constitution fixing the upper and lower cases is not limited by the above. Alternatively, bolts and nuts may be used for securing the flangc 102 of the upper case 68 to the flange 75 of the lower case 70. Adhesive may be used for bonding among the flange 102 of the upper case 68, the flange 92 of the bellows 53 and the flange 75 of the lower case 70.

A annular seal 103 is provided at a upper comer of the upper case 68. The seal 103 prevents oil from leaking by cooperation with the drive mechanism 112 when the bellows 53 is damaged, as will be described below.

The drive mechanism 112 has a circular contact plate or member 113 and a rod 115 secured to a center of the circular plate 113. The bottom surface of the circular plate 113 contacts to the top 88 of the bellows 53 so that the pressure of the dynamic pressure chamber 58 is applied to the plate 113. The circular plate 113 and the top of the bellows 53 may be secured integrally. A guide bush 118 is inserted into and secured to the boss 105 of the upper case 68 by engagement between a screw thread formed on the outer surface of the guide bush 118 and a screw thread formed on the inner surface of the boss 105.

The rod 115 is slidably inserted through the bore of the guide bush 118 and the rod 115 can move upwardly or downwardly. The constant pressure chamber 56 communicates with the outside of the housing 50 through the guide bush 118. A bore may be formed on the top 98 of the upper case 68 to provide a path between the constant pressure chamber and the outside of the housing.

A resilient member or compression spring 121 is interposed between the guide bush 118 and the circular plate 113 to resiliently urge the circular plate 113. The rod 115 has a blind hole formed on the top of the rod 115. A screw thread is formed on the inner surface of the blind hole 123.

The drive mechanism 112 has a screen member or light blocking member 134 for blocking selectively the light transmitted from the light emitting element 129 to the light receiving clement 132 as will be described below. The screen member 134 has a screen portion 135 extending vertically and a coupling portion or connecting part 139 extending from the top end of the screen portion 135. The connecting part 139 is substantially perpendicular to the screen portion 135. The screen portion 135 has a hole formed on the end portion of the connecting part 139. A adjusting screw 142 is inserted into the hole of the screen member 134 and the screen member 134 is secured to the screw 142 by means of a retaining ring 143. The screw 142 with the blocking member 134 is inserted into the blind hole 123 of the rod 115.

The sensing portion or sensor 62 has a circuit board 126, a light emitting clement 129 and a light receiving element 132 mounted on the circuit board 126. The light emitting element 129 and the light receiving element 132 are mounted on the circuit board 126 to oppose each other. It is preferable that the light emitting element 129 is LED and the light receiving element 132 is CdS cell. The screen portion of the blocking member 134 is interposed between the light emitting element 129 and the light receiving element 132. The circuit board 126 has conductive wires 130 so as to connect the sensing portion 62 to the control panel. Thus, the electric power can be supplied to the sensing portion 62 and the signal produced at the sensing portion 62 can be transmitted to the control panel.

The detector 25 has a cap 146. The cap 146 is mounted at the top of the upper case 68. The cap 146 is made of the opaque material to block a light from the outside of the detector 25. The cap 146 has a hole 148 through which the wires 130 pass. The hole 148 allows the constant pressure chamber 56 communicating with the outside of the detector 25.

Referring to Fig. 1 and Fig. 2. the operation of the optical liquid level detector in accordance with the present invention will be explained below.

The level of fuel contained in the tank 12 becomes higher, the pressure of the dynamic pressure chamber 58 increases. A increased pressure of the chamber 58 causes the top wall 88 of bellows 53 and the circular plate 113 to move upwardly until the pressure balances a resilient force of the spring 121. The blocking part 134 rises along with the circular plate 113. Then, the quantity of light which is received by the light receiving element 132 increases. So, an electric signal corresponding to the increased quantity of light received by the light receiving element 132 is generated and transmitted to the control board 16.

When the level of oil lowers, the pressure of the dynamic pressure chamber 58 lowers. So, the blocking part 134 moves downwardly and the quantity of light which is transmitted to the light receiving element 132 decreases. The change of a residual quantity of oil contained in the oil tank is indicated on the display panel 32 of the control board 16.

The guide bush 118 is screwed into the boss 105 so that, when the bush 118 is rotate. it moves either upwardly or downwardly. The force of the spring 121 urging resilicntly to the contact plate 113 may be adjusted. And then, the pressure of the dynamic pressure chamber 58 is adjusted. Thus. this adjustment function of the guide bush 118 allows the detector 25 being adjusted for various height of liquid tanks. The guide bush 118 may be rotated and disengaged from the upper case 58. Then, the spring 121 is easily replaced with another resilient member having a different elastic coefficient.

When the adjusting screw 142 may be rotated, the screen 134 moves upwardly or downwardly. Thus, when the tank is almost vacant, the zero point of the display panel can be adjusted.

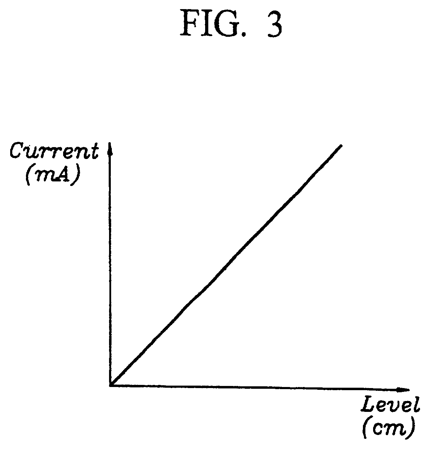

As shown in Fig. 3, the linear relationship between the output signal generated by the sensor 62 and the level of fuel contained in the tank can be obtained.

According to another embodiment of the present invention, the detector device 25 may have an elongated connecting pipe attached to the lower case and be mounted on the top of the fuel tank. The connecting pipe extends from the bottom of the lower case 70 of the detector 25 to the bottom of the fuel tank.

Although it is described in the above embodiments that the detector is used for the boiler system for home having the oil tank, the detector in accordance with the present invention may be used for detecting a level of any kind of liquid contained in the container. the detector in accordance with the present invention may be used in, for example, a washing machine, an fuel reservoir in a gas station, and so on.

Also, the detector device in accordance with the present invention may be used for detecting a level of fuel contained in a fuel reservoir of a vehicle. The detector device is mounted on the top of the fuel tank. It is preferable that the detector is positioned at the geometrical center point in horizontal plane. The bottom of the connecting pipe of the detector extends to the bottom of the fuel tank.

It is shown in Fig. 2 that the sensor 62 is mounted on the top of the upper case 68. In a further embodiment, alternatively, the sensor 62 may be attached to and hung from the ceiling of the cap 146. The light emitting and receiving elements 129 and 132 extend from the circuit board downwardly. The screen plate extends upwardly from the end of the coupling portion 139.

In another further embodiment, the pressure adjusting member may be mounted in place of the lower case for adjusting the pressure of the dynamic pressure chamber. For example, the lower case have a hole and a plug for blocking the hole. The plug can be selectively opened. Then, the pressure of the dynamic pressure chamber can be adjusted.

Although the invention has been shown and described with respect to the exemplary embodiments, it should be understood that various changes, modifications and. additions may be made without departing from the scope of the invention as claimed.

## Claims

1. A liquid level detector for detecting the level of liquid contained in a liquid container comprising:
a housing (50);
a wall (53) having at least a portion (90) being flexible, said wall dividing the inside of said housing into a dynamic pressure chamber and a constant pressure chamber, the dynamic pressure chamber communicating with the liquid container;
a drive mechanism (112) having a contact member (113) contacting to said wall and a screen member (134) connecting to the contact member;
a resilient member (121) for resiliently urging said contact member of the drive mechanism against said wall; and
a sensor having a light emitting element (129) and a light receiving element (132) opposing each other, wherein said screen member of the drive mechanism is interposed between the light emitting element and the light receiving element.

2. The detector of Claim 1, wherein said wall having a closed end and a flexible side, and the contact member of the drive mechanism contacts to the closed end.

3. The detector of Claim 1 or 2, further comprising a position adjusting device for adjusting the relative location of the screen member to the light emitting and receiving elements.

4. The detector of one of Claim 1 - 3, wherein said contact member of the drive mechanism has a shape corresponding to the inside of the housing, and the housing has an annular seal.

5. The detector of one of Claim 1 - 4, wherein said light emitting element is LED and said light receiving element is CdS cell.

6. The detector of one of Claim 1 - 5, further comprising a pressure adjusting device for adjusting the pressure of the dynamic pressure chamber.

7. A fuel supplying system for supplying to a fuel combustion system comprising a fuel tank and a level detector, according to one of the Claims 1 - 6.

8. The system of Claim 7, further comprising a tube connecting the tank and the combustion system and wherein the detector is mounted on the tube.

## Patentansprüche

1. Sensor zur Ermittlung des Flüssigkeitsstandes einer Flüssigkeit in einem Flüssigkeitsbehälter, umfassend:
ein Gehäuse (50);
eine Wand (53) mit wenigstens einem flexiblen Bereich, wobei die Wand (53) das Innere des Gehäuses in eine Kammer mit veränderlichem Druck und eine Kammer mit konstantem Druck teilt, wobei die Kammer mit veränderlichem Druck mit dem Flüssigkeitsbehälter kommuniziert;
eine Antriebsvorrichtung (112) mit einem Kontaktelement (113), welche in Kontakt ist mit der Wand und einem Schirmbauteil (134) in Verbindung mit dem Kontaktelement (113);
einem elastischen Element (121), um das Kontaktelement (113) der Antriebsvorrichtung elastisch gegen die Wand zu drücken; und
einen Sensor mit einem Licht emittierenden Element (129) und einem Licht empfangenden Element (132), die jeweils dem anderen Element gegenüberliegend angeordnet sind, wobei das Schirmbauteil (134) der Antriebsvorrichtung zwischen dem Licht emittierenden Element und dem Licht empfangenden Element angeordnet ist.

2. Sensor nach Anspruch 1, wobei die Wand ein geschlossenes Ende und ein flexibles Ende besitzt und wobei das Kontaktelement der Antriebsvorrichtung das geschlossene Ende kontaktiert.

3. Sensor nach einem der Ansprüche 1 oder 2, weiter umfassend:
eine Positionsjustiervorrichtung zur Justierung der relativen Position des Schirmbauteils (134) gegenüber dem Licht emittierenden und dem Licht empfangenden Element.

4. Sensor nach einem der Ansprüche 1 bis 3, wobei das Kontaktelement der Antriebsvorrichtung eine äußere Form entsprechend der Innenseite des Gehäuses besitzt und wobei das Gehäuse eine umlaufende Dichtung aufweist.

5. Sensor nach einem der Ansprüche 1 bis 4, wobei das Licht emittierende Element eine LED ist und das Licht empfangende Element eine CdS-Zelle ist.

6. Sensor nach einem der Ansprüche 1 bis 5, ferner umfassend eine Druckeinstellvorrichtung zur Einstellung des Druckes der Kammer mit veränderlichem Druck.

7. Kraftstoffversorgungssystem zur Versorgung eines Kraftstoffverbrennungssystems, umfassend einen Kraftstofftank und einen Sensor nach einem der Ansprüche 1 bis 6.

8. System nach Anspruch 7, ferner umfassend eine Leitung, die den Tank und das Verbrennungssystem verbindet, wobei der Sensor an der Leitung angebracht ist.

## Revendications

1. Capteur pour la détermination d'un niveau d'un liquide dans un récipient de liquide, comportant:
- un boîtier (50)
- une paroi (53) avec au moins une zone flexible ; la paroi (53) divisant l'intérieur du boîtier dans une chambre avec un pression variable et une chambre avec une pression constante ; la chambre avec une pression variable communiquant avec le récipient de liquide ;
- un dispositif d'entraînement (112) avec un élément de contact (113), lequel dispositif est en contact avec la paroi et un élément d'écran (134) est en liaison avec l'élément de contact (113);
- un élément élastique (121) destiné à presser l'élément de contact (113) du dispositif d'entraînement de façon élastique contre la paroi ; et
- un capteur avec un élément (129) émettant de la lumière et un élément (132) recevant de la lumière qui sont disposés à chaque fois en face de l'autre élément ; l'élément écran (134) du dispositif d'entraînement est disposé entre l'élément émettant la lumière et l'élément recevant la lumière.

2. Capteur selon la revendication 1 pour lequel la paroi possède une extrémité fermée et une extrémité flexible et pour lequel l'élément de contact du dispositif d'entraînement contacte l'extrémité fermée.

3. Capteur selon une des revendication 1 ou 2 comprenant en outre :
un dispositif d'ajustement de position pour ajuster la position relative de l'élément écran (134) situé en face de l'élément émettant la lumière ou de l'élément recevant la lumière.

4. Capteur selon une des revendications 1 à 3 pour lequel l'élément de contact du dispositif d'entraînement présente une forme extérieure correspondant au côté intérieur du boîtier et pour lequel le boîtier présente un joint d'étanchéité circonférentiel.

5. Capteur selon une des revendications 1 à 4, pour lequel l'élément émettant la lumière est un LED et l'élément recevant la lumière est une cellule CdS.

6. Capteur selon une des revendications 1 à 5, comprenant en outre un dispositif de réglage de pression pour régler la pression de la chambre avec une pression variable.

7. Système d'alimentation en carburant pour alimenter un système de combustion de carburant, comprenant un réservoir de carburant et un capteur selon une des revendications 1 à 6.

8. Système selon la revendication 7, comprenant en outre une conduite qui relie le réservoir et le système de combustion pour lequel système le capteur est fixé à la conduite.
